# EUROPÄISCHE PATENTANMELDUNG

(11) **EP 3 871 947 A1**
(43) Veröffentlichungstag der Anmeldung: **01.09.2021**
(21) Anmeldenummer: 20159230.0
(22) Anmeldetag: 25.02.2020
(51) Int. Cl.: B62B 3/00, B62B 5/00

(54) **HANDWAGEN**

(71) Anmelder: Fuxtec GmbH, 71083 Herrenberg (DE)
(72) Erfinder: Gumprecht, Tim, 71120 Grafenau (DE)
(74) Vertreter: Ruckh, Rainer Gerhard

(57) **Zusammenfassung**

Die Erfindung betrifft einen Handwagen (1) mit einem auf Rädern (3) gelagerten Lastaufnahmemitteln (5). Wenigstens eines der Räder (3) ist mittels eines elektrischen Antriebs angetrieben.

## Beschreibung

Die Erfindung betrifft einen Handwagen.

Handwagen, auf welche sich die vorliegende Erfindung bezieht, können insbesondere von Bollerwagen gebildet sein. Derartige Bollerwagen weisen generell auf Rädern gelagerte Lastaufnahmemittel auf, die im Wesentlichen aus einem Boden und daran gelagerten Geländerelementen bestehen. Ein derartiger Bollerwagen weist eine Deichsel oder einen Handgriff auf. Damit kann ein Benutzer den Bollerwagen schieben oder ziehen.

In dem Bollerwagen können Lasten mitgeführt werden. Auch ist es möglich Kinder in einem derartigen Bollerwagen zu transportieren.

Je nach Gewicht der auf dem Bollerwagen befindlichen Lasten und Personen ist ein großer Kraftaufwand der jeweiligen Bedienperson erforderlich, um den Bollerwagen fortzubewegen.

Der Erfindung liegt die Aufgabe zugrunde, die Funktionalität von Handwagen zu erweitern.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Handwagen mit einem auf Rädern gelagerten Lastaufnahmemitteln. Wenigstens eines der Räder ist mittels eines elektrischen Antriebs angetrieben.

Der erfindungsgemäße Handwagen, der bevorzugt in Form eines Bollerwagens ausgebildet ist, kann nicht nur von einem Benutzer geschoben oder gezogen, das heißt generell mit Muskelkraft, bewegt werden.

Vielmehr weist der erfindungsgemäße Handwagen wenigstens ein, bevorzugt genau ein mittels eines elektrischen Antriebs angetriebenes Rad auf. Damit wird ein elektrisches Antriebssystem bereitgestellt, mittels dessen der Handwagen selbsttätig, das heißt ohne Einsatz von Muskelkraft bewegt werden kann.

Dies ist insbesondere dann vorteilhaft, wenn der Handwagen mit schwereren Gütern beladen ist oder wenn mit diesem Kinder transportiert werden. Dann stellt der elektrische Antrieb ein effizientes Hilfsmittel dar, mit dem der Handwagen ohne Kraftaufwand und ohne manuelle Unterstützung bewegt werden kann.

Dadurch ist die Funktionalität des Handwagens erheblich erweitert.

Ein wesentlicher Vorteil der Erfindung besteht darin, dass der elektrische Antrieb mit dem angetriebenen Rad integraler Bestandteil des Handwagens ist, das heißt nachträgliche Adaptionen zur Integration des elektrischen Antriebs mit dem angetriebenen Rad sind nicht erforderlich. Der elektrische Antrieb und das mit diesem angetriebene Rad können platzsparend in der Konstruktion des Handwagens integriert werden, ohne dessen Baugröße zu vergrößern.

Gemäß einer vorteilhaften Ausführungsform ist der elektrische Antrieb von einem im Rad integrierten Elektromotor gebildet.

Insbesondere ist der Elektromotor ein Radnabenantrieb.

Da somit der Elektromotor im Rad selbst integriert ist, wird für diesen kein zusätzlicher Bauraum beansprucht, wodurch besonders kompakte Bauformen realisiert werden können.

Weiter vorteilhaft ist das mit dem elektrischen Antrieb angetriebene Rad federnd gelagert.

Durch die federnde Lagerung des angetriebenen Rads ist gewährleistet, dass dieses stets mit vorgegebenen Anpressdruck auf einer Unterlage, insbesondere einer Fahrbahn, aufliegt, sodass auch bei unebenen Fahrbahnen stets gewährleistet ist, dass die Antriebskraft des Elektromotors über das Rad auf die Unterlage übertragen wird.

Gemäß einer vorteilhaften Ausführungsform ist dem elektrischen Antrieb eine autarke Energieversorgung zugeordnet.

Damit kann der elektrische Antrieb auch über längere Zeiträume ohne zeitaufwändige Ladevorgänge oder dergleichen genutzt werden.

Besonders zweckmäßig ist die autarke Energieversorgung von zwei 18V Akkumulatoren gebildet.

Bei diesen 18V Akkumulatoren handelt es sich um Standardprodukte, die in einer Vielzahl von anderen Geräten eingesetzt werden können und somit flexibel eingesetzt werden können.

Vorteilhaft sind Bedienelemente vorgesehen, durch deren Betätigung Steuerbefehle für die Steuereinheit generierbar sind.

Dadurch wird dem Benutzer eine komfortable, einfach bedienbare Benutzer-Schnittstelle zur Bedienung des elektrischen Antriebs zur Verfügung gestellt.

Besonders vorteilhaft kommunizieren die Bedienelemente und die Steuereinheit über eine berührungslos arbeitende Datenübertragungsstrecke. Insbesondere ist die berührungslos arbeitende Datenübertragungsstrecke eine Bluetooth-Verbindung.

Durch die berührungslos arbeitende Datenübertragungsstrecke kann die Anbringung der Bedienelemente unabhängig von der Position der Steuereinheit gewählt werden. So kann der Benutzer die Bedienelemente an einer ergonomisch günstigen Position am Handwagen, insbesondere an dessen Handgriff, fixieren. Die Bedienelemente können beispielsweise von Tasten, Knöpfen, Hebeln und dergleichen gebildet sein.

Gemäß einer konstruktiv vorteilhaften Ausgestaltung weist der Handgriff einen Teleskop-Mechanismus auf.

Der Handgriff ist damit stufenlos oder in diskreten Stufen ein- und ausfahrbar. Damit kann die Länge des Handgriffs an die ergonomischen Gegebenheiten eines Benutzers optimal angepasst werden.

Weiter vorteilhaft weist der Handwagen eine Bremse auf.

Die Bremse kann einfach mechanisch betätigt werden, beispielsweise indem ein Benutzer mit dem Fuß eine Bremsstange betätigt, die mit Bremsen an Rädern des Handwagens gekoppelt werden. Dadurch kann der fahrende Handwagen schnell und sicher angehalten oder abgebremst werden.

Gemäß einer vorteilhaften Ausgestaltung ist der Handwagen vierrädrig ausgebildet, wobei wenigstens eines der vier Räder mittels des elektrischen Antriebs angetrieben ist.

Alternativ weist der Handwagen vier nicht angetriebene Räder und wenigstens ein zusätzliches mittels eines elektrischen Antriebs angetriebenes Rad auf.

Ein Handwagen beziehungsweise ein Bollerwagen weist in seiner bekannten Grundkonstruktion vier an einer Rahmenkonstruktion gelagerte nicht angetriebene Räder auf. Erfindungsgemäß ist wenigstens eines dieser Räder als angetriebenes Rad ausgeführt oder es ist wenigstens ein zusätzliches angetriebenes Rad vorgesehen.

Die Erfindung wird im Folgenden anhand der Zeichnungen erläutert. Es zeigen:
- Figur 1:: Seitenansicht eines Ausführungsbeispiels des erfindungsgemäßen Handwagens.
- Figur 2:: Draufsicht auf die Rückseite des Handwagens gemäß Figur 1.

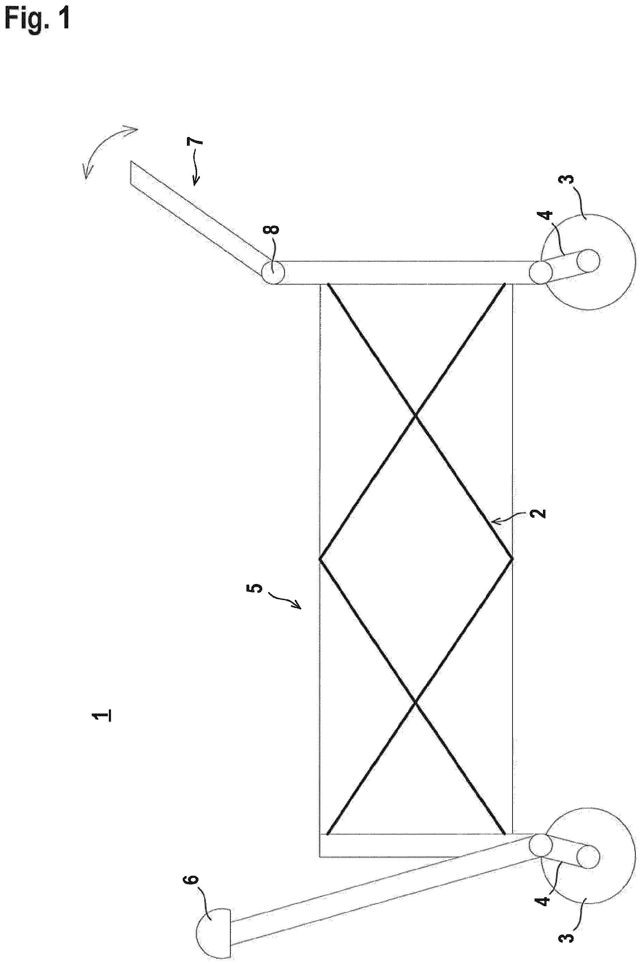

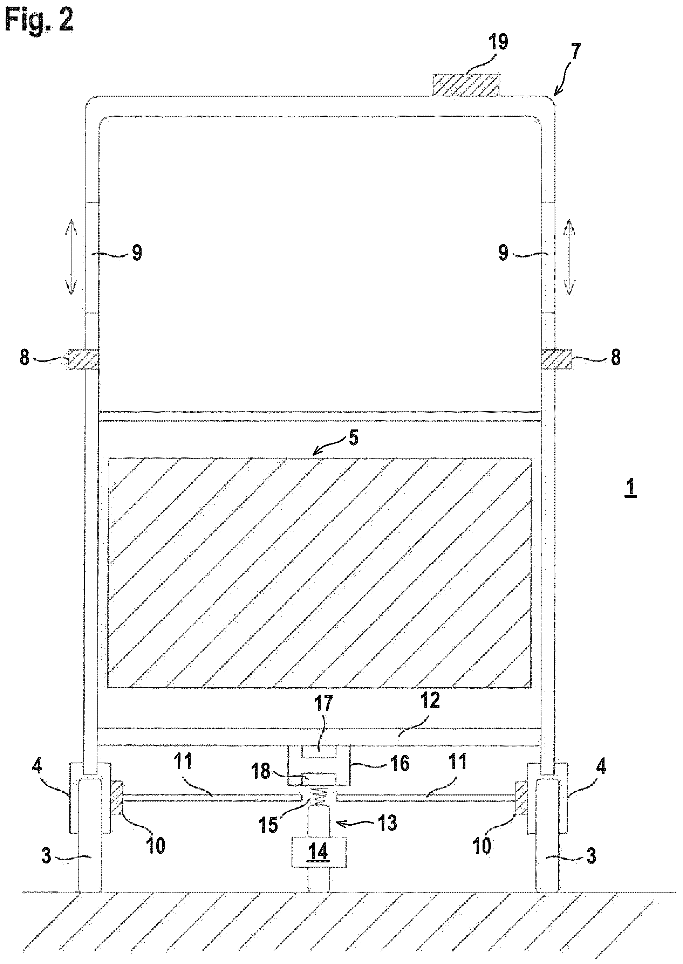

Die Figuren 1 und 2 zeigen ein Ausführungsbeispiel des erfindungsgemäßen Handwagens 1 in Form eines Bollerwagens.

Der Handwagen 1 weist in bekannter Weise eine Rahmenkonstruktion 2 aus Profilen auf, an dessen Unterseite vier nicht angetriebene Räder 3 angeordnet sind, die auf einer Unterlage wie zum Beispiel einer Fahrbahn abrollen können. Die Räder 3 sind in Drehlagerungen 4 drehbar gelagert.

In der Rahmenkonstruktion 2 ist ein Lastaufnahmemittel 5 gelagert, das im vorliegenden Fall von einem flexiblen Flächenelement wie einer Plane gebildet ist. Das Lastaufnahmemittel 5 bildet einen Behälter mit einem geschlossenen Boden und geschlossenen Seitenwänden. Das Lastaufnahmemittel 5 ist an seiner Oberseite offen, sodass über die offene Oberseite Güter in das Lastaufnahmemittel 5 eingeführt werden können und mit dem Handwagen 1 transportiert werden können. Auch können zum Beispiel Kinder im Lastaufnahmemittel 5 transportiert werden.

An der Vorderseite des Handwagens 1 befindet sich eine Deichsel 6, mit der ein Benutzer den Handwagen 1 ziehen kann.

An der Rückseite des Handwagens 1 befindet sich ein Handgriff 7, mit dem ein Benutzter den Handwagen 1 schieben kann.

Der Handgriff 7 weist an seinem oberen Ende ein in horizontaler Richtung verlaufendes Segment auf, an welches ein Benutzer den Handgriff 7 greift, um den Handwagen 1 zu schieben.

An dieses horizontale Segment schließen zwei parallel zueinander, identische in vertikaler Richtung verlaufende Segmente an. In jedem der vertikalen Segmente befindet sich ein Drehgelenk 8. Dadurch kann der obere Teil des Handgriffs 7 in Richtung des in Figur 1 dargestellten Doppelpfeils geschwenkt werden.

Weiterhin befindet sich in jedem vertikalen Segment ein Teleskop-Element 9. Diese Elemente bilden einen Teleskop-Mechanismus, durch welchen der Handgriff 7 stufenlos oder in diskreten Stufen ein- und ausfahrbar ist, wodurch die Länge des Handgriffs 7 variiert werden kann, dargestellt durch die Doppelpfeile in Figur 2.

Wie Figur 2 zeigt, sind im Bereich der Drehlagerungen 4 der hinteren nicht angetriebenen Räder 3 Bremsen 10 vorgesehen. Die Bremsen 10 sind über eine in horizontaler Richtung verlaufenden Bremsstange 11 verbunden. Die Bremsen 10 werden betätigt indem ein Benutzer mit einem Fuß die Bremsstange 11 betätigt.

Wie Figur 2 weiterhin zeigt, sind die in Verlängerung der vertikalen Segmente verlaufenden Profile, die den Handgriff 7 ausbilden, durch einen Querträger 12 verbunden.

An diesem Querträger 12 ist mittels einer weiteren, nicht dargestellten Drehlagerung ein mittels eines elektrischen Antriebs angetriebenes Rad 13 drehbar gelagert. Im vorliegenden Fall ist der elektrische Antrieb ein Elektromotor 14, der im Rad 13 selbst integriert ist und zwar als in der Nabe des angetriebenen Rads 13 integrierter Radnabenantrieb.

Anstelle des zusätzlichen angetriebenen Rads 13 könnte auch wenigstens eines der Räder 3, insbesondere ein Hinterrad, mittels des elektrischen Antriebs angetrieben sein.

Das angetriebene Rad 13 ist federnd gelagert. Hierzu ist das angetriebene Rad 13 über eine Feder 15 oder Federanordnung an eine Halterung 16 angekoppelt. Dadurch wird das angetriebene Rad 13 mit vorgegebenen Anpressdruck gegen die Unterlage geführt.

In dieser Halterung 16 befindet sich eine autarke Energieversorgung 17, die im vorliegenden Fall von zwei 18V Akkumulatoren gebildet ist.

Weiterhin befindet sich in der Halterung 16 eine Steuereinheit 18 zur Steuerung des elektrischen Antriebs.

Weiterhin sind am Handgriff 7 Bedienelemente 19 vorgesehen, durch deren Betätigung Steuerbefehle für die Steuereinheit 18 generierbar sind.

Die Bedienelemente 19 und die Steuereinheit 18 kommunizieren über eine berührungslos arbeitende Datenübertragungsstrecke. Die berührungslos arbeitende Datenübertragungsstrecke ist eine Bluetooth-Verbindung.

Die Bedienelemente 19 können in Form von Tasten, Knöpfen, Hebeln und dergleichen gebildet sein.

### B ezugszei chenli ste

- (1): Handwagen
- (2): Rahmenkonstruktion
- (3): Rad
- (4): Drehlagerung
- (5): Lastaufnahmemittel
- (6): Deichsel
- (7): Handgriff
- (8): Drehgelenk
- (9): Teleskop-Element
- (10): Bremse
- (11): Bremsstange
- (12): Querträger
- (13): angetriebenes Rad
- (14): Elektromotor
- (15): Feder
- (16): Halterung
- (17): Energieversorgung
- (18): Steuereinheit
- (19): Bedienelement

## Patentansprüche

1. Handwagen (1) mit einem auf Rädern (3) gelagerten Lastaufnahmemittel (5), **dadurch gekennzeichnet, dass** wenigstens eines der Räder (3) mittels eines elektrischen Antriebs angetrieben ist.

2. Handwagen (1) nach Anspruch 1, **dadurch gekennzeichnet, dass** der elektrische Antrieb von einem im Rad (3) integrierten Elektromotor (14) gebildet ist.

3. Handwagen (1) nach Anspruch 2, **dadurch gekennzeichnet, dass** der Elektromotor (14) ein Radnabenantrieb ist.

4. Handwagen (1) nach einem der Ansprüche 1 bis 3, **dadurch gekennzeichnet, dass** das mit dem elektrischen Antrieb angetriebene Rad (13) federnd gelagert ist.

5. Handwagen (1) nach einem der Ansprüche 1 bis 4, **dadurch gekennzeichnet, dass** dem elektrischen Antrieb eine autarke Energieversorgung (17) zugeordnet ist.

6. Handwagen (1) nach Anspruch 5, **dadurch gekennzeichnet, dass** die autarke Energieversorgung (17) von zwei 18V Akkumulatoren gebildet ist.

7. Handwagen (1) nach einem der Ansprüche 1 bis 6, **dadurch gekennzeichnet, dass** dem elektrischen Antrieb eine Steuereinheit zugeordnet ist, welche zur Steuerung des elektrischen Antriebs ausgebildet ist.

8. Handwagen (1) nach Anspruch 7, **dadurch gekennzeichnet, dass** Bedienelemente (19) vorgesehen sind, durch deren Betätigung Steuerbefehle für die Steuereinheit (18) generierbar sind.

9. Handwagen (1) nach Anspruch 8, **dadurch gekennzeichnet, dass** die Bedienelemente (19) und die Steuereinheit (18) über eine berührungslos arbeitende Datenübertragungsstrecke kommunizieren.

10. Handwagen (1) nach Anspruch 9, **dadurch gekennzeichnet, dass** die berührungslos arbeitende Datenübertragungsstrecke eine Bluetooth-Verbindung ist.

11. Handwagen (1) nach einem der Ansprüche 1 bis 10, **dadurch gekennzeichnet, dass** dieser einen Handgriff (7) aufweist.

12. Handwagen (1) nach Anspruch 11, **dadurch gekennzeichnet, dass** die Bedienelemente (19) am Handgriff (7) angeordnet sind.

13. Handwagen (1) nach einem der Ansprüche 10 oder 12, **dadurch gekennzeichnet, dass** der Handgriff (7) einen Teleskop-Mechanismus aufweist.

14. Handwagen (1) nach einem der Ansprüche 1 bis 13, **dadurch gekennzeichnet, dass** dieser eine Bremse (10) aufweist.

15. Handwagen (1) nach einem der Ansprüche 1 bis 14, **dadurch gekennzeichnet, dass** dieser ein Bollerwagen ist.

16. Handwagen (1) nach einem der Ansprüche 1 bis 15, **dadurch gekennzeichnet, dass** dieser vierrädrig ausgebildet ist, wobei wenigstens eines der vier Räder (3) mittels des elektrischen Antriebs angetrieben ist.

17. Handwagen (1) nach einem der Ansprüche 1 bis 15 **dadurch gekennzeichnet, dass** dieser vier nicht angetriebene Räder (3) und wenigstens ein zusätzliches mittels eines elektrischen Antriebs angetriebenes Rad (13) aufweist.
